# EUROPÄISCHE PATENTANMELDUNG

(11) **EP 0 569 726 A1**
(43) Veröffentlichungstag der Anmeldung: **18.11.1993**
(21) Anmeldenummer: 93106119.6
(22) Anmeldetag: 15.04.1993
(51) Int. Cl.: B60K 17/28, F16D 25/14

(54) **Verfahren zum Zuschalten der Zapfwelle an einem Nutzfahrzeug mittels einer mechanischen Kupplung**

(30) Priorität: 12.05.1992 DE 4215583
(71) Anmelder: ROBERT BOSCH GMBH, 70442 Stuttgart (DE)
(72) Erfinder: Hesse, Horst, Dipl.-Ing., W-7000 Stuttgart 1 (DE); Loedige, Heinrich, Dipl.-Ing., W-7143 Vaihingen/Enz (DE); Freiwald, Andreas, Dipl.-Ing., O-1800 Brandenburg (DE)

(57) **Zusammenfassung**

Das Verfahren zum Zuschalten der Zapfwelle (10) an einem Nutzfahrzeug mittels einer hydraulisch betätigten Kupplung (12) benutzt ein elektronisches Regelgerät (14), das ein elektromagnetisch betätigbares Steuerventil (15) ansteuert. Dieses dient zur Druckmittelsteuerung für die Lamellenkupplung (12) zwischen Antriebsstrang (13) und Zapfwelle (11A). Dem Regler werden eingegeben die Drehzahl des Antriebsstrangs (13) und die Drehzahl der Zapfwelle. Es wird die Differenz dieser beiden Drehzahlen ermittelt, und durch Vorgabe einer Sollkurve wird diese Differenzdrehzahl innerhalb einer bestimmten Zeitspanne zu Null gemacht, wobei der Kupplungsdruck so geregelt wird, daß die gemessene Drehzahldifferenz der vorgegebenen Sollkurve nachgeführt wird.

## Beschreibung

### Stand der Technik

Die Erfindung geht aus von einem Verfahren zum Zuschalten der Zapfwelle an einem Nutzfahrzeug mittels einer mechanischen Kupplung, die über ein elektro-hydraulisches Druckventil mittels einer Elektronik angesteuert wird. Dabei wird ein elektrisches Signal in Form einer Rampe erzeugt, um ein sanftes Einkuppeln zu erzielen. Diese Lösung ist unbefriedigend und entspricht nicht den heutigen Komfortansprüchen.

### Vorteile der Erfindung

Das erfindungsgemäße Verfahren zum Zuschalten der Zapfwelle an einem Nutzfahrzeug hat demgegenüber den Vorteil, daß das Zuschalten der Zapfwelle besonders sanft erfolgt bzw. verschiedenen Zwecken angepaßt werden kann. Es ergeben sich vor allem folgende Vorteile: kurze Zeit durch schnelles Überwinden des Kupplungsleerhubes, komfortables Einkuppeln durch das Ausnutzen der zulässigen Kupplungsrutschzeit, Automatisierung des Kupplungsvorgangs, Schonung des Antriebsstranges und des Anbaugerätes durch sehr sanftes Einkuppeln; der Einkuppelvorgang erfolgt lastunabhängig.

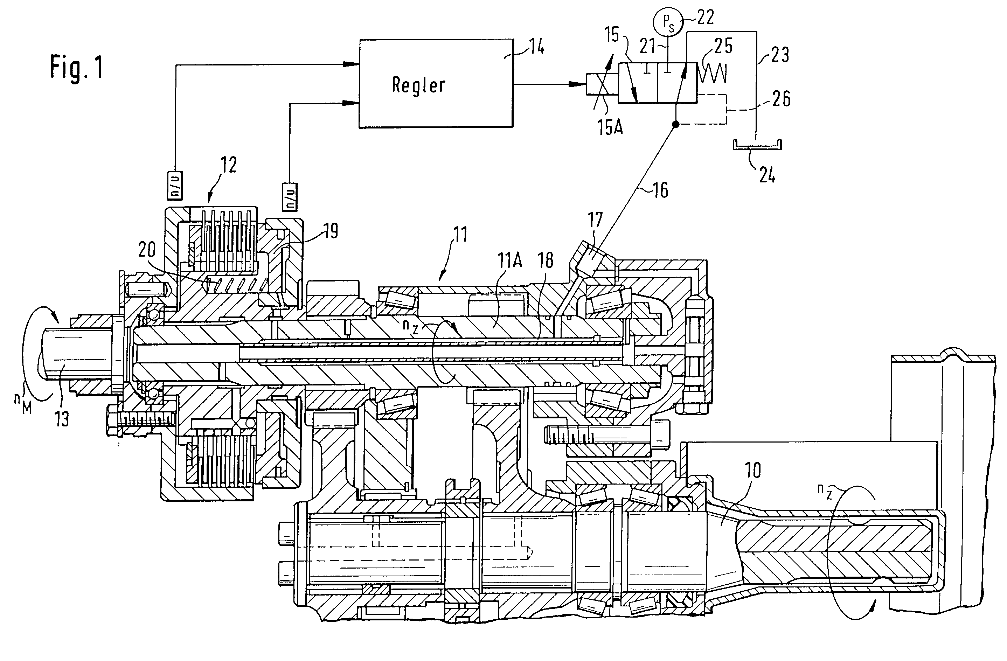

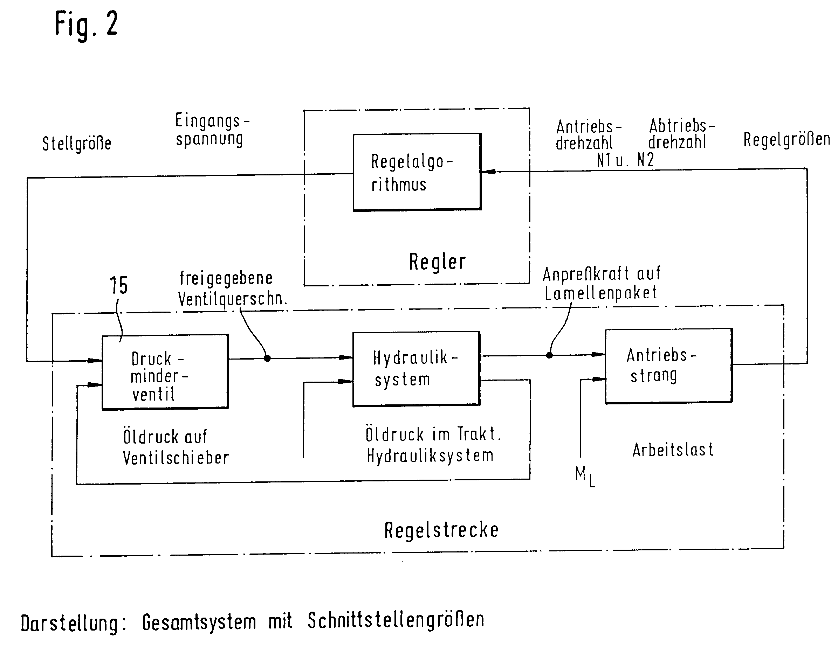

Ein Ausführungsbeispiel der Erfindung ergibt sich aus der nachfolgenden Beschreibung und Zeichnung. Letztere zeigt in Figur 1 die Zapfwelle mit Steuer- bzw. Regeleinrichtung, in Figur 2 das Gesamtregelsystem mit Schnittstellengrößen.

### Beschreibung des Erfindungsgegenstandes

In Figur 1 ist mit 10 die Zapfwelle eines Ackerschleppers bezeichnet, die über ein Vorgelege 11 und eine Lamellenkupplung 12 mit der Motorwelle 13 bzw. einem Getriebeteil, das mit der Motorwellendrehzahl n_{M} angetrieben ist, in Verbindung gebracht werden kann. Die Vorgelegewelle 11A dreht sich in eingekuppeltem Zustand mit der Drehzahl n_{ZV}. Einem elektronischen Regler 14 werden die Motordrehzahl n_{M} und die Zapfwellendrehzahl n_{ZV} eingegeben. Der Regler 10 betätigt ein elektromagnetisches Steuerventil 15, von dem eine Druckleitung 16 zu einem Einlaß 17 am Vorgelege 11 führt. Von dort besteht Verbindung über einen Kanal 18 zum Kupplungskolben 19 der Lamellenkupplung 12. Diesem entgegen wirkt eine Druckfeder 20. An das Steuerventil 15 ist über eine Leitung 21 die Druckmittelquelle 22 angeschlossen, außerdem führt eine Leitung 23 zum Behälter 24. Der Elektromagnet 15A des Steuerventils arbeitet gegen eine Reglerfeder 25 und über eine Steuerleitung 26 mit dem Druck aus der Steuerleitung 16.

Figur 2 zeigt das Blockschaltbild des Regelkreises der Zapfenwellenkupplung. Die Stellgröße ist das Eingangssignal für ein proportionales Druckminderventil 15. Beeinflußt wird das Druckminderventil zusätzlich durch den sich ändernden Druck im Hydrauliksystem. Das Druckminderventil stellt proportional zu seinem Eingangssignal einen Druck ein, der, sobald die Lamellen der Kupplung zur Anlage kommen, einer Anpreßkraft und damit einem übertragbaren Drehmoment entspricht. Abhängig von der Last an der Zapfwelle führt das übertragene Drehmoment zur Beschleunigung der Zapfwelle und des damit verbundenen Arbeitsgerätes. Die Antriebsdrehzahl (Motordrehzahl) der Lamellenkupplung sowie deren Antriebsdrehzahl werden dem elektronischen (digitalen) Regler 14 zugeführt. Dieser regelt den Kupplungsdruck so, daß der Schlupf zwischen Eingangsdrehzahl und Ausgangsdrehzahl der Lamellenkupplung entlang einer Sollschlupfkurve abgebaut wird. Der gesamte Schaltzyklus gliedert sich in drei Phasen:

### 1. Leerhub des Kupplungskolbens 19

In der ersten Phase wird eine reine Steuerung wirksam. Das Durckminderventil 15 wird so angesteuert, daß sich ein Kupplungsdruck einstellt, mit dem die Rückstellfederkraft 20 des Kupplungskolbens sicher überwunden wird. Dies führt zu einem schnellen Füllen der Kupplung mit Öl und damit zu einer geringen Totzeit der Kupplung für den Leerhub.

### 2. Reglungsphase

Erst nach Erkennen einer Drehbewegung am Kupplungsausgang kann die eigentliche Reglungsphase wie oben beschrieben einsetzen.

### 3. Haltephase

Nach Abbau des Kupplungsschlupfes auf einen kleinen Restwert (z.B. 5%), wird an der Kupplung ein Haltedruck eingestellt. Dieser Haltedruck kann dem Maximaldruck entsprechen zur Ubertragung des maximalen Kupplungsmomentes. Er kann aber auch so gewählt werden, daß sich, bei gleichzeitiger Uberwachung des Kupplungsschlupfes und Abschalten bei einer Grenzschlupfüberschreitung, eine Momentenbegrenzung ergibt.

Eine zusätzliche Logik kann unzulässige Schaltzustände erkennen und Schaden verhindern:
- Die Füllzeit der Kupplung ist ein Maß für den Tothub des Kolbens und damit ein Verschleißindikator (Wartungsanzeige).
- Eine Abweichung vom Sollschlupf zu größeren Schaltzeiten hin wird überwacht, und bei einer Überschreitung der maximalen Zeit für die Schlupfphase wird der Kupplungsvorgang abgebrochen, um thermischen Schaden zu vermeiden.
- Die Kupplungseingangsdrehzahl und damit die Motordrehzahl wird überwacht, um einen unzulässig starken Drehzahlabfall und damit ein "Abwürgen" des Motors zu verhindern.

## Patentansprüche

1. Verfahren zum Zuschalten der Zapfwelle (10) an einem Nutzfahrzeug mittels einer mechanischen Kupplung, die über ein von einer elektronischen Regeleinrichtung elektromagnetisch angesteuertes Steuerventil (15) betätigt wird, dadurch gekennzeichnet, daß die Kupplung (12) als Lamellenkupplung ausgebildet ist und der Regeleinrichtung die Ein- und Ausgangsdrehzahl n_{M} und n_{ZV} der Kupplung eingegeben und die Differenzdrehzahl ermittelt wird und daß durch Vorgabe einer Sollkurve die Differenzdrehzahl innerhalb einer bestimmten Zeitspanne zu Null wird, wobei der Kupplungsdruck so geregelt wird, daß die gemessene Drehzahldifferenz der vorgegebenen Sollkurve nachgebildet wird.

2. Verfahren nach Anspruch 1, dadurch gekennzeichnet, daß das elektromagnetisch betätigbare Steuerventil (15) entgegen dem Elektromagneten (15A) von einer Reglerfeder (25) und dem Druck in der zur Kupplung führenden Steuerleitung beaufschlagt ist.
